# EUROPEAN PATENT SPECIFICATION

(11) **EP 1 215 261 B1**
(45) Date of publication and mention of the grant of the patent: **12.09.2007**
(21) Application number: 01129316.4
(22) Date of filing: 14.12.2001
(51) Int. Cl.: C09K 11/02, C09K 11/08, C09K 11/80, C09K 11/64, C09K 11/59, C09K 11/78

(54) **Method of producing aluminate phosphor**
Aluminiumoxid-Leuchtstoff- Herstellungsverfahren
Méthode de fabrication d'un matériau luminescent à base d'aluminate

(30) Priority: 18.12.2000 JP 2000383421
(43) Date of publication of application: 19.06.2002
(73) Proprietor: Sumitomo Chemical Company, Limited, Tokyo 104-8260 (JP)
(72) Inventor: Kumada, Nobuhiro, Kofu-shi, Yamanashi (JP); Kinomura, Nobukazu, Kofu-shi, Yamanashi (JP); Ono, Keiji, Tsukuba-shi, Ibaraki (JP); Miyazaki, Susumu, Kitasoma-gun, Ibaraki (JP)
(74) Representative: Vossius & Partner

(56) References cited:
- US-A- 3 714 490
- US-A- 4 275 300
- US-A- 5 643 674
- PATENT ABSTRACTS OF JAPAN vol. 1997, no. 04, 30 April 1997 (1997-04-30) & JP 8 327604 A (MARKTEC CORP), 13 December 1996 (1996-12-13)

## Description

The present invention relates to aphosphor particle having a phosphor layer made of a phosphor on a surface thereof. The present invention particularly relates to a phosphor particle suitably used in a vacuum ultra-violet radiation excited light emitting element such as a plasma display panel (hereinafter referred to as PDP) and a rare gas lamp.

Recently, vacuum ultra-violet radiation excited light emitting elements having a system in which a phosphor is excited by vacuum ultra-violet rays radiated by rare gas discharge so as to emit light have been developed actively. A typical example is the development of PDPs. PDPs are flat panel displays that allow the screen size to increase, while cathode ray tubes (CRT) or color liquid crystal displays do not. Therefore, expectations are placed on PDPs as displays in public spaces and for use in TV sets with large screens. A PDP is a display element in which a multiplicity of discharge microspaces (hereinafter referred to as "display cells") are provided in a matrix. In each display cell, discharge electrodes are provided, and a phosphor is applied on inner walls of the display cell. In the space inside each display cell, a rare gas such as He-Xe, Ne-Xe, or Ar is capsulated, and discharge is caused in the rare gas when a voltage is applied to the discharge electrodes, thereby radiating vacuum ultra-violet rays. The phosphor is excited by the vacuum ultra-violet rays, thereby emitting visible rays. By specifyingpositions of the display cells to emit light, images are displayed. Furthermore, by using phosphors emitting light of blue, green, and red colors that are three primary colors of light, full-color display can be carried out.

An example of the vacuum ultra-violet radiation excited light emitting elements, apart from the PDP, is a rare gas lamp for illumination. The rare gas lamp is a lamp that emits light by means of a system in which vacuum ultra-violet rays are generated by discharge in the rare gas and the vacuum ultra-violet rays are converted into visible light by the phosphor. The rare gas lamps attract attentions from the viewpoint of environment preservation since they do not use mercury, unlike the fluorescent lamps.

Phosphors that are excited by vacuum ultra-violet rays radiated by discharge in a rare gas have been proposed already. Typical examples of blue light emitting phosphors are BaMgAl₁₀O₁₇:Eu and BaMgAl₁₄O₂₃:Eu. Typical examples of green light emitting phosphors are BaAl₁₂O₁₉ Mn and BaMgAl₁₄O₂₃:Mn. Typical examples of red light emitting phosphors are Y₂O₃:Eu and (Y. Gd)BO₃:Eu.

Phosphors are expensive since rare earths, which are expensive, are used therein, and development of inexpensive phosphor particles is desired.

An object of the present invention is to provide a phosphor particle having a small content of a phosphor, thereby being inexpensive.

This object could be solved by a phosphor particle as defined in claim 1 having a phosphor layer made of a phosphor on its surface and containing an inorganic non-phosphor material inside.

The subject-matter of the present invention is thus a phosphor particle comprising a phosphor layer made of a phosphor on a surface and an inorganic non-phosphor material inside of the phosphor layer.

It has been found that as long as a particle has a phosphor layer made of a phosphor on its surface, the particle is working as a phosphor particle even if it contains an inorganic material inside.

Such a particle is inexpensive as compared with a particle an entirety of which is made of a phosphor since the former would have a smaller content of the phosphor. An advantage of higher emission luminance can be obtained unexpectedly, in addition to the advantage of a decreased content of a phosphor in the phosphor particle.

The phosphor particle of the present invention may be any particle as long as it has a phosphor layer made of a phosphor on its surface and contains an inorganic non-phosphor material inside. Furthermore, the phosphor layer may have any thickness. However, if the phosphor layer has a thickness exceeding 100 nm, a large amount of expensive rare earth metal such as Eu constituting a luminescent center of the phosphor may be required. Therefore, from the viewpoint of cost, the phosphor layer has a thickness of not more than 100 nm. If the phosphor layer is excessively thin, a decrease of emission luminance may occur. Therefore, the phosphor layer has a thickness of not less than 10 nm, and more preferably not less than 20 nm.

The inorganic non-phosphor material in the phosphor particle of the present invention is not particularly limited, but it is preferably alumina or silica from the viewpoint of cost.

Among the phosphors containing a compound made of M¹, Al, and O (the M¹ is at least one metal element selected from Ba, Sr, Mg, and Ca) as a matrix and Eu and/or Mn as an activator, Ba-Mg-Al-Eu-O-type compounds in which M¹ is Ba and Mg and the activator is Eu is one of the examples of a blue light emitting phosphor. Particularly, BaMgAl₁₀O₁₇:Eu is an another example.

Among the phosphors containing a compound made of M¹, Al, and O (the M¹ is at least one metal element selected from Ba, Sr. Mg, and Ca) as a matrix and Eu and/or Mn as an activator, Ba-Al-Mn-O-type compounds in which M¹ is Ba and the activator is Mn is one of examples of a green light emitting phosphor. Particularly, BaAl₁₂O₁₉:Mn is an another example. Apart from these, Zn-Si-Mn-O-type compounds are also one of the examples of a green light emitting phosphor, and particularly Zn₂SiO₄:Mn is an another example.

Among the phosphors containing a compound made of M⁴ and O (the M⁴ is at least one metal element selected from Y, Gd, and B) as a matrix and Eu as an activator, Y-Eu-O-type compounds in which M⁴ is Y and the activator is Eu is one of the examples of a red light emitting phosphor. Particularly, Y₂O₃:Eu is one of the examples, and (Gd, Y)BO₃:Eu is also an another example of the same.

The method for manufacturing the phosphor particle of the present invention may be any method as long as among elements constituting a phosphor, a compound containing a metal element and an inorganic non-phosphor material are mixed and baked. For instance, the method may be such that water in which particles of a solid inorganic non-phosphor material are dispersed and an aqueous solution of a compound containing a metal element among the elements constituting a phosphor of a phosphor layer are mixed, and a precursor of the phosphor is deposited around the inorganic material by using a precipitant, then dried and baked.

The phosphor particle of the present invention has a high luminance even though containing an inexpensive inorganic non-phosphor material inside, and hence, it is particularly suitable for use in a vacuum ultra-violet radiation excited light emitting element such as a PDP and a rare gas lamp.

Furthermore, the phosphor particle of the present invention exhibits excellent light emitting characteristics not only when excited by vacuum ultra-violet rays, but also when excited by ultra-violet rays, cathode rays, or X-rays. In other words, the present invention provides a phosphor particle that can be excited by a variety of energy including vacuum ultra-violet rays, ultra-violet rays, cathode rays, and X-rays, and that exhibits excellent light emitting characteristics.

### [Examples]

The following description will depict the present invention in more detail, referring to examples. The present invention, however, is not limited by the examples. In the examples, one of a series of α-alumina powders that have been developed by Sumitomo Chemical in the trade name of "SUMICORAUDOM" was used as the non-phosphor material.

### Example 1

A slurry was prepared by dispersing 10 g of α-alumina having a mean primary particle diameter of 1.5 µm in 200 ml of an aqueous solution in which barium nitrate, magnesium nitrate, and europium nitrate were dissolved so that a molar ratio of Ba:Mg:Al:Eu was 0.27:0.3:10:0.03, While stirring the slurry, 50 ml of ammonia water in which 1g of ammonium carbonate was dissolved was added to the slurry. The slurry was further stirred for 60 minutes, and precipitates were obtained, The obtained precipitates were recovered by filtering, then, dried and crushed. A precursor obtained was charged in an alumina boat, and was baked in a reducing atmosphere containing 2 percent by volume (vol%) of hydrogen and 98 vol% of argon at 1400°C for one hour, whereby phosphor particles were obtained. It was found by means of the scanning electronic microscope that a phosphor layer had a thickness of approximately 80 nm. As a result of measurement by X-ray diffraction (phase identification by means of Rigaku RU-200 rotating anode X-ray generator manufactured by Rigaku/MSC), the particle had a mixed phase of BaMgAl₁₀O₁₇:Eu and α-alumina.

When irradiated with ultra-violet rays by EXCIMER 146 nm LAMP (manufactured by Ushio Inc.) in a vacuum chamber with a vacuum of not more than 6.7 Pa (5×10⁻²Torr), the phosphor particles emitted intense blue light. The emission luminance was 42.7 cd/m². When excited with ultra-violet rays of 254 nm or 365 nm, the phosphor also exhibited blue light emission with a high luminance. Calculated from the initial molar ratio of Ba:Mg:Al:Eu, BaMgAl₁₀O₁₇:Eu was 7.9 mol%, and α-alumina was 92.1 mol%.

### Example 2

Phosphor particles were produced in the same manner as that of Example 1 except that the molar ratio of Ba:Mg:Al:Eu was set to 0.18:0.2:10:0.02. Calculated from the molar ratio of Ba:Mg:Al:Eu, BaMgAl₁₀O₁₇:Eu was 4.8 mol%, and α-alumina was 95.2 mol%. When irradiated with ultra-violet rays in the same manner as that of Example 1, the phosphor particles exhibited intense blue light emission, and the emission luminance was 40.1 cd/m².

### Comparative Example 1

Powder of BaMgAl₁₀O₁₇:Eu was irradiated with ultra-violet rays by EXCIMER 146 nm LAMP (manufactured by Ushio Inc.) in a vacuum chamber with a vacuum of not more than 6.7 Pa (5×10⁻² Torr), the emission luminance was 36.8 cd/m².

The phosphor particle of the present invention is inexpensive since it has a small content of a phosphor that is expensive, and is suitably used particularly in vacuum ultra-violet radiation excited light emitting elements such as PDPs and rare gas lamps, and therefore has a great industrial advantage.

## Claims

1. A phosphor particle comprising a phosphor layer made of a phosphor on a surface and an inorganic non-phosphor material inside of the phosphor particle,
wherein the phosphor layer has a thickness of not less than 10 nm and not more than 100 nm.

2. The phosphor particle according to claim 1, wherein the inorganic non-phosphor material is alumina.

3. The phosphor particle according to claim 1, wherein the inorganic non-phosphor material is silica.

4. The phosphor particle according to any one of claims 1 to 3, wherein the phosphor layer comprises a compound which comprises M¹, Al, and O as a matrix and at least one of Eu and Mn as an activator, the M¹ being at least one metal element selected from Ba, Sr, Mg, and Ca.

5. The phosphor particle according to any one of claims 1 to 3, wherein the phosphor layer comprises a compound which comprises Zn, Si, and 0 as a matrix and at least one of Tb and Mn as an activator.

6. The phosphor particle according to any one of claims 1 to 3, wherein the phosphor layer comprises a compound which comprises M⁴ and O as a matrix and Eu as an activator, the M⁴ being at least one metal selected from Y, Gd, and B.

7. A vacuum ultra-violet radiation excited light emitting element comprising the phosphor particle according to any one of claims 1 to 6.

## Patentansprüche

1. Leuchtstoffpartikel, umfassend eine Leuchtschicht aus einem Leuchtstoff an der Oberfläche und ein anorganisches, nicht leuchtendes Material im Inneren des Leuchtstoffpartikels, wobei die Dicke der Leuchtschicht nicht weniger als 10 nm und nicht mehr als 100 nm beträgt.

2. Leuchtstoffpartikel gemäß Anspruch 1, wobei das anorganische, nicht leuchtende Material Aluminiumoxid ist.

3. Leuchtstoffpartikel gemäß Anspruch 1, wobei das anorganische, nicht leuchtende Material Siliziumdioxid ist.

4. Leuchtstoffpartikel gemäß einem der Ansprüche 1 bis 3, wobei die Leuchtschicht eine Verbindung umfasst, welche M¹, Al und O als Matrix und mindestens eines von Eu und Mn als Aktivator umfasst, wobei M¹ mindestens ein aus Ba, Sr, Mg und Ca ausgewähltes Metall ist.

5. Leuchtstoffpartikel gemäß einem der Ansprüche 1 bis 3, wobei die Leuchtschicht eine Verbindung umfasst, welche Zn, Si und O als Matrix und mindestens eines von Tb und Mn als Aktivator umfasst.

6. Leuchtstoffpartikel gemäß einem der Ansprüche 1 bis 3, wobei die Leuchtschicht eine Verbindung umfasst, welche M⁴ und O als Matrix und Eu als Aktivator umfasst, wobei M⁴ mindestes ein aus Y, Gd und B ausgewähltes Metall ist.

7. Durch Vakuum-Ultraviolettstrahlung angeregtes lichtemittierendes Element umfassend den Leuchtstoffpartikel gemäß einem der Ansprüche 1 bis 6.

## Revendications

1. Particule de luminophore comprenant une couche de luminophore constituée d'un luminophore sur une surface et d'un matériau non luminophore inorganique à l'intérieur de la particule de luminophore,
dans laquelle la couche de luminophore a une épaisseur non inférieure à 10 nm et non supérieure à 100 nm.

2. Particule de luminophore selon la revendication 1, dans laquelle le matériau non-luminophore inorganique est l'alumine.

3. Particule de luminophore selon la revendication 1, dans laquelle le matériau non-luminophore inorganique est la silice.

4. Particule de luminophore selon l'une quelconque des revendications 1 à 3, dans laquelle la couche de luminophore comprend un composé qui comprend M¹, Al et O en tant que matrice et au moins l'un de Eu et Mn en tant qu'activateur, le M¹ étant au moins un élément métallique choisi parmi
Ba, Sr, Mg et Ca.

5. Particule de luminophore selon l'une quelconque des revendications 1 à 3, dans laquelle la couche de luminophore comprend un composé qui comprend Zn, Si et O en tant que matrice et au moins l'un de Tb et Mn en tant qu'activateur.

6. Particule de luminophore selon l'une quelconque des revendications 1 à 3, dans laquelle la couche de luminophore comprend un composé qui comprend M⁴ et O en tant que matrice et Eu en tant qu'activateur, le M⁴ étant au moins un métal choisi parmi
Y, Gd et B.

7. Elément électroluminescent excité par un rayonnement ultraviolet sous vide comprenant la particule de luminophore selon l'une quelconque des revendications 1 à 6.
